# NEUE EUROPÄISCHE PATENTSCHRIFT

(11) **EP 1 236 331 B2**
(45) Veröffentlichungstag und Bekanntmachung des Hinweises auf die Entscheidung über den Einspruch: **02.11.2011**
(45) Hinweis auf die Patenterteilung: 09.07.2003
(21) Anmeldenummer: 01938126.8
(22) Anmeldetag: 17.04.2001
(51) Int. Cl.: H04L 29/06, H04L 29/12, H04L 12/58

(54) **KOMMUNIKATIONSSYSTEM, ZENTRALER COMPUTER, SOWIE VERFAHREN ZUM ÜBERTRAGEN EINER URL**
COMMUNICATIONS SYSTEM, CENTRAL COMPUTER AND METHOD FOR TRANSMITTING A URL
SYSTEME DE COMMUNICATION, ORDINATEUR CENTRAL ET PROCEDE POUR TRANSMETTRE UN URL

(30) Priorität: 17.04.2000 DE 10019197; 13.09.2000 DE 20015838 U
(43) Veröffentlichungstag der Anmeldung: 04.09.2002
(73) Patentinhaber: Google Inc., Mountain View, CA 94043 (US)
(72) Erfinder: KRAMER, Tobias, 85579 Neubiberg (DE)
(74) Vertreter: Reinhard - Skuhra - Weise & Partner GbR
(86) Internationale Anmeldenummer: PCT/EP2001/004406
(87) Internationale Veröffentlichungsnummer: WO 2001/080513

(56) Entgegenhaltungen:
- WO-A-97/31491
- WO-A1-98/03923
- WO-A1-98/09243
- WO-A2-97/31491
- DE-A1- 19 747 438
- DE-A1- 19 813 450
- DE-A1- 19 843 203
- US-A- 5 895 471
- US-A- 5 978 773
- DODDS ET AL: "Splitterless DSL at 230 kb/s for Internet access" COMMUNICATIONS, COMPUTERS AND SIGNAL PROCESSING, 1999 IEEE PACIFIC RIM CONFERENCE ON VICTORIA, BC, CANADA 22-24 AUG. 1999, PISCATAWAY, NJ, USA,IEEE, US, 22. August 1999 (1999-08-22), Seiten 22-25, XP010356639 ISBN: 0-7803-5582-2

## Beschreibung

Die vorliengende Erfindung betrifft ein Kommunikationssystem. Weiterhin betrifft die Erfindung ein Verfahren zum Übertragen einer URL an einen zentralen Computer gemäß dem Oberbegriff des Anspruchs 9 und einen zentralen Computer zur Verwendung in einem derartigen Verfahren gemäß dem Oberbegriff des Anspruchs 10, wie aus der WO 98/03923 bekannt.

Insbesondere offenbart die WO 98/03923 ein Kommunikationssystem mit einem Client-System mit einem Eingabemittel zum Eingeben einer Kennung in Form eines Barcodescanners und ein Übertragungsmittel zum Übertragen des gescannten Barcodes und einer Benutzeridentifikation an einen zentralen Computer. Der zentrale Computer ordnet dem Barcode eine entsprechende gespeicherte URL aus einer ersten Datenbank und Benutzerinformationen aus einer zweiten Datenbank zu und sendet die URL zum Aufrufen auch das Client-System oder sendet dem Client-System eine Benutzerinformation zu, falls der Zugriff beispielsweise durch ein Mitgliedschaftserfordernis beschränkt ist.

Die WO 98/09243 offenbart ein Kommunikationssystem mit einem Client-System in Form eines PC oder TV-Geräts mit einem Eingabemittel zum Eingeben einer Kennung, welche einer URL entspricht. Das Client-System überträgt die Kennung an einen Server, welcher die Kennung an die Software einer speziellen Webseite weiterleitet. die Webseite ruft entweder gemäß einer Zuordnungstabelle die der URL entsprechende Webseite unmittelbar auf oder gibt einen Bericht über diese Webseite aus, der Kommentare von den Benutzern enthalten kann.

Insbesondere betrifft die Erfindung eine Vorrichtung und ein Verfahren zum Erfassen und Abspeichern von URLs (*Uniform Resource Locator*)*,* sowie von dazugehörigen Informationen.

Die Datenübertragung über das Internet nimmt weiter an Bedeutung zu. Hierbei kommunizieren i.a. ein zentraler Computer mit z.B. einem entfernt hiervon angeordneten Mobiltelefon, oder z.B. einem entfernt vom zentralen Computer angeordneten - stationären oder tragbaren - Computer, etc. Die Kommunikation erfolgt unter Verwendung von sog. Internetprotokollen, insbesondere dem Transmission Control Protocol (TCP) und dem Internet Protocol (IP), kurz TCP/IP. Hierzu ist z.B. auf dem entfernten Computer oder dem Mobiltelefon eine Software geladen, die das TCP/IP Protokoll verstehen und auswerten kann (Socket oder TCP/IP Stack).

Der am schnellsten wachsende Dienst des Internets beruht auf dem Hypertext Transfer Protocol (HTTP) und wird World Wide Web (WWW) genannt. Hierbei werden i.a. einzelne Dokumente, sog. Web-Seiten oder Web-Pages, übertragen. HTTP ist ein Client-Server-Protkoll. Beispielsweise kann der o.g. entfernte Computer ein (bei Bedarf) mit dem World Wide Web verbindbarer Clientrechner sein: Dabei ist als Clientsoftware auf dem entfernten Computer ein sog. Web-Browser geladen. Der zentrale Computer ist z.B. ein ständig mit dem World Wide Web verbundener Hostrechner, d.h. ein sog. Web-Host (unter einer großen Zahl weiterer Web-Hostrechner).

Die Internetverbindung zum zentralen Computer wird hergestellt, indem der entfernte Computer zunächst mit einem weiteren, ihm zugeordneten Web-Host verbunden wird. Auf diesem läuft die der Clientsoftware auf dem entfernten Computer entsprechende Serversoftware. Dann wird die zu der jeweils gewünschten Homepage bzw. Internetseire auf dem zentralen Computer gehörende Web-Adresse eingegeben. Dies geschieht in Form eines Domainnamens bzw. einer URL- (Universal Resource Locator-) Adresse. Diese ist aus mehreren Teilen aufgebaut: Der erste Teil bezeichnet das Interner-Protokoll (Zeichenfolge "http://"). Darauf folgt - optional - die Zeichenfolge "www" als Bezeichnung für das World Wide Web. Der dritte Teil der URL-Adresse kennzeichnet den jeweiligen zentralen Computer, auf dem die Homepage gespeichert ist. Mit dem vierten Teil kann - optional - der Pfad zu dem lokalen Verzeichnis bezeichnet werden, in dem die Homepage auf dem zentralen Computer gespeichert ist, und der letzte Teil kann den exakten Dateinamen der Homepage kennzeichnen.

Beispielsweise weist die Domain http://www.abc.com auf eine bestimmte Seite z.B. der Firma ABC. Wie erläutert, kann diese Domain noch weiter verzweigt sein, um z.B. zu ermöglichen, daß ein Benutzer direkt auf die Seite für einen bestimmten Produktbereich der Firma gelangen kann - so könnte man z.B. durch Eingeben der URL http://www.abc.com/telefone/ direkt auf eine Seite für den Produktbereich Telefone der Firma ABC gelangen. Auch eine weitere Verzweigung ist möglich, etwa mit der URL http://www.abc.com/telefone/mobiltelefone/. An diesem Beispiel ist zu erkennen, wie schwer es ist, sich diese URL zu merken bzw. zu notieren.

Ein Kommunikationssystem, ein Verfahren, sowie ein zentraler Computer zum Zugriff auf Internetseiten mittels einer Konvertierung der Telefonnummern in URLs sind aus der Patentanmeldung WO 9 731 491 bekannt.

Der Erfindung liegt die Aufgabe zugrunde, ein neuartiges flexibleres Kommunikationssystem, ein neuartiges flexibleres Verfahren zum Übertragen einer URL an einen zentralen Computer, sowie einen neuartigen flexibleren zentralen Computer zur Verwendung in einem derartigen Verfahren zur Verfügung zu stellen.

Die Erfindung löst die o.g. und weitere Aufgaben durch die Gegenstände der Ansprüche 1, 9 und 10.

Vorteilhafte Weiterbildungen und Ausgestaltungen der Erfindung sind in den Unteransprüchen angegeben.

Mit der Erfindung wird - insbesondere durch das erfindungsgemäße Zuordnen der übertragenen Kennung zu einer von der Kennung verschiedenen URL (Uniform Resource Locator) - insbesondere eine einfache Erfassung, Speicherung und Verwaltung von URLs ermöglicht.

Besonders bevorzugt ist eine Ausgestaltung, bei welcher das Eingabemittel und/oder das Übertragungsmittel ein Erkennungsmittel aufweist, welches die Eingabe einer Kennung von der Eingabe einer URL unterscheidet, und in Reaktion auf die Eingabe einer Kennung automatisch deren Übertragung an einen vorbestimmten, zum Empfang von Kennungen bestimmten zentralen Computer veranlaßt.

Vorteilhaft wird die Kennung in Form einer Folge von Telephonverbindungs-Wahlzeichen an den zentralen Computer übertragen.

Bevorzugt wird zusammen mit der Kennung eine am Eingabemittel eingegebene weitere, benutzerspezifische Kennung übertragen.

Vorteilhaft weist das System außerdem auf: Anzeigemittel und/oder Speichermittel, welche vom zentralen Computer so gesteuert werden, daß sie die der Kennung zugeordnete URL und/oder die der URL zugeordnete Internetseite anzeigen bzw. speichern.

Bevorzugt werden die Anzeigemittel und/oder Speichermittel vom zentralen Computer so gesteuert, daß sie zusammen mit der URL weitere, der URL zugeordnete Informationen anzeigen bzw. speichern.

Vorteilhaft sind die Anzeigemittel und/oder Speichermittel entfernt, insbesondere mehr als 1 km entfernt vom zentralen Computer angeordnet, und werden von diesem über eine Internetverbindung gesteuert.

Besonders vorteilhaft sind die Anzeigemittel und/oder Speichermittel im Moment der Kennungseingabe entfernt, insbesondere mehr als 1 m, mehr als 10 m, mehr als 100 m, oder mehr als 1 km entfernt von den Eingabe- und/oder Übertragungsmitteln angeordnet.

Bevorzugt sind die Anzeigemittel und/oder Speichermittel Teil eines entfernten Computers, insbesondere ein Bildschirm eines entfernten Computers, oder Teil eines entfernten Telefons.

Vorteilhaft sind die Anzeigemittel und/oder Speichermittel nahe bei, insbesondere weniger als 1m entfernt von den Eingabe- und/oder Übertragungsmitteln angeordnet, und insbesondere Teil der Eingabe- und/oder Übertragungsmittel.

Bei einer bevorzugten Ausgestaltung muß vor der Anzeige durch die Anzeigemittel bzw. vor einer Speicherung durch die Speichermittel eine Zusatzkennung an den zentralen Computer übertragen werden, die der Benutzerkennung entspricht, und die an weiteren, den Anzeigemitteln bzw. Speichermitteln zugeordneten Eingabemitteln eingegeben wird.

Gemäß der Erfindung wird ein Kommunikationssystem zum Zugriff auf Internetseiten bereitgestellt, welches von mehreren Benutzern gemeinsam verwendet werden kann, wobei die o.g. Kennung unter Zuordnung zum jeweiligen Benutzer in einer Datenbank abspeicherbar ist, und ein entfernt vom Eingabemittel angeordnetes Mittel vorgesehen ist zum späteren Abrufen der der Kennung zugeordneten Internetseite durch den jeweiligen Benutzer.

Vorteilhaft überträgt bei der Erfindung ein Benutzer eine einer URL eindeutig zugeordnete Kennung von einem Telefon, Mobiltelefon oder PC zu einer Vorrichtung, insbesondere einer zentralen Datenbank. Die Kennung kann allgemein eine beliebige Kombination aus Zahlen und Buchstaben sein, besonders bevorzugt eine Ziffernfolge. Vorteilhaft ist die Kennung z.B. in einem Printmedium, z.B. einer Zeitung, einer Zeitschrift, einem Katalog, oder auf einer Visitenkarte, etc. abgebildet, vorteilhaft in maschinenlesbarer Form, z.B. in Form eines Barcodes bzw. Strichcodes. Die Kennung kann z.B. auch über ein visuelles bzw. audiovisuelles Medium übertragen werden (z.B. Fernsehen, Homepage, Online-, Offline-Dienst, etc.), oder kann z.B. auf einem magnetischen Datenträger, z.B. einer Videokassette, einer Diskette, etc. gespeichert sein, und z.B. auf einem Computerbildschirm, einem Fernsehbildschirm, einem Display, etc., angezeigt werden - insbesondere auch in der o.g. maschinenlesbaren Form. Denkbar ist z.B. auch eine Übertragung der Kennung über ein Audiomedium, z.B. per Hörfunk.

Die Kennung kann bestimmten Daten zugeordnet sein, z.B. den Daten eines Textes und/oder eines Bildes, insbesondere den Daten eines in dem o.g. Printmedium abgedruckten Testes und/oder Bildes.

Die Übertragung mittels eines Mobiltelefons kann z.B. mit Hilfe einer SMS (short message service) erfolgen, wobei die Kennung in Form einer am Mobiltelefon generierten Textnachricht, z.B. einer Ziffernfolge, an die zentrale Datenbank geschickt wird.

Bevorzugt ist die Kennung so gewählt, daß sie einer Telefonnummer entspricht, insbesondere der Telefonnummer eines dem Eingabemittel und/oder dem Übertragungsmittel zugeordneten Telefonanschlusses (besonders vorteilhaft eines Mobiltelefonanschlusses). Auch ist möglich, daß die gleiche Ziffernfolge sowohl als Kennung für eine URL, und als Telefonnummer des Betreibers der der URL zugeordneten Internetseite verwendet wird (d.h. als Telefonnummer eines weiteren Telefonanschlusses). Entsprechend dient vorteilhaft die gleiche Ziffemfolge außer als Kennung für eine E-mail Adresse auch als Telefonnummer des Benutzers, dem die E-mail Adresse gehört, insbesondere als Telefonnummer des dem Eingabemittel und/oder dem Übertragungsmittel zugeordneten Telefonanschlusses.

Besonders bevorzugt ist es, wenn eine identische Ziffernfolge sowohl als Kennung für eine E-mail Adresse eines Betreibers einer Internetseite, als auch als Kennung für die der Seite zugeordnete URL, sowie als Telefonnummer des dem Betreiber zugeordneten Telefonanschlusses verwendet wird. Die Telefonnummer ist besonders bevorzugt eine Service-Nummer, z.B. eine 00800, oder eine 0800-Service-Nummer, und/oder eine Nummer, unter der ein Benutzer weltweit erreichbar ist (z.B. eine 0700-Nummer oder 00800-Nummer).

Das Eingabemittel und/oder das Übertragungsmittel kann z.B. Teil eines Telefons, insbesondere eines tragbaren Telefons sein, oder z.B. auch Teil eines Computers, insbesondere eines tragbaren Computers oder eines PCs.

Alternativ kann das Eingabemittel spezifisch und ausschließlich für die Speicherung - und spätere Anzeige - von Kennungen ausgelegt sein. Z.B. kann das Eingabemittel ein kleines, insbesondere scheckkartenförmiges, tragbares Gerät sein (kleiner als 4cm x 1cm (insbesondere 0,5cm) x 2cm), mit einem Halbleiterspeicher, in welchem ca. 20 - 30 Einträge zu jeweils weniger als 10, insbesondere 7 Ziffern gespeichert werden können, einem Display, und mit einer Tastatur, mit welcher Kennungs-Ziffern eingegeben (und später gelöscht) werden können. Wird das Gerät mit dem o.g. Eingabemittel verbunden, werden die Kennungen vorteilhaft automatisch zunächst zu diesem übertragen, und dann zum zentralen Computer.

Die Kennung kann z.B. von einem Telefon aus beispielsweise dadurch an den zentralen Computer übertragen werden, daß der Benutzer zunächst durch Betätigen entsprechender Wahltasten des Telefons die Telefonnummer des dem zentralen Computer zugeordneten Telefonanschlusses eingibt, woraufhin durch Senden der entsprechenden Telefonverbindungs-Wahlzeichen eine Telefonverbindung zum zentralen Computer hergestellt wird. Daraufhin gibt der Benutzer - wiederum durch Betätigen entsprechender Telefonwahltasten - die Kennung in Form einer Ziffernfolge ein (und/oder in Form einer Folge von den Telefonwahltasten zusätzlich zugeordneten Buchstaben, und/oder in Form einer Ziffern/Buchstabenfolge). Die Kennung kann dann z.B. durch Senden der entsprechenden Telefonverbindungs-Wahlzeichen an den zentralen Computer übertragen werden. Eine entsprechende Übertragung der Kennung über eine herkömmliche Telefonverbindung, und mit Hilfe von Telefonverbindungswahlzeichen ist z.B. auch von einem Computer aus möglich.

Alternativ kann zur Kennungsübertragung - z.B. von einem Telefon, oder einem Computer aus - zunächst eine Internetverbindung zum zentralen Computer aufgebaut werden, insbesondere durch Eingabe von dessen URL-Adresse. Der Datenaustausch zwischen Telefon/Computer und zentralem Computer erfolgt dann unter Verwendung von Internetprotokollen, insbesondere gemäß dem TCP/IP-Protokoll.

Wie bereits oben erwähnt, kann die Kennung auch auf beliebige andere Weise, z.B. mittels einer SMS (short message service) an den zentralen Computer übertragen werden. Hierzu gibt der Benutzer z.B. durch Betätigen entsprechender Wahltasten eines Telefons die Kennung in Form einer Ziffernfolge ein (und/oder in Form einer Folge von den Telefonwahltasten zusätzlich zugeordneten Buchstaben, und/oder in Form einer Ziffern/Buchstaben-Folge), sowie die Telefonnummer des dem zentralen Computer zugeordneten Telefonanschlusses (oder einen beliebigen, den zentralen Computer kennzeichnenden Code). Die Kennung wird dann z.B. in Form einer Textdatei (die die eingegebene Ziffernfolge enthält) an einen weiteren zentralen Computer gesendet, besonders bevorzugt in Form einer SMS an den Rechner eines SMS-Serviceproviders. Dieser überträgt die Kennung an den zentralen Computer. Hierzu baut der weitere zentrale Computer zunächst eine Verbindung zum zentralen Computer auf, z.B. eine Telefonverbindung (durch Wählen der Telefonnummer des Telefonanschlusses des zentralen Computers), und überträgt diesem dann die o.g. (SMS-) Textdatei.

Die Eingabe der URL-Adresse bzw. der Telefonnummer des zentralen Computers bzw. des den zentralen Computer kennzeichnenden Codes kann vorteilhaft dadurch automatisiert werden, daß eine spezielle Taste vorgesehen ist (bzw. bei Realisierung in Software ein spezieller Software-Button). Wird die Taste (bzw. der Software-Button) betätigt, wählt der Computer bzw. das Telefon automatisch die URL-Adresse bzw. die Telefonnummer des zentralen Computers an, bzw. sendet - über den weiteren zentralen Computer - eine Textdatei, insbesondere eine SMS an den zentralen Computer.

Besonders vorteilhaft ist es, wenn das Eingabemittel und/oder das Übertragungsmittel ein Erkennungsmittel aufweist, welches die Eingabe einer Kennung von der Eingabe einer gewöhnlichen URL und/oder einer gewöhnlichen elektronischen Postadresse bzw. E-mail Adresse unterscheidet. Das Erkennungsmittel ist i.a. durch entsprechende Softwarekomponenten verwirklicht. Besonders vorteilhaft wird in Reaktion auf die Eingabe der Kennung automatisch deren Übertragung an einen vorbestimmten, zum Empfang von Kennungen bestimmten zentralen Computer veranlaßt. Dies kann z.B. dadurch geschehen, daß eine Telefonverbindung oder eine Internetverbindung zu diesem zentralen Computer aufgebaut wird. Hierzu wird - nachdem das Erkennungsmittel ermittelt hat, daß eine Kennung eingegeben wurde - die dem zentralen Computer zugeordnete Telefonnummer bzw. URL-Adresse aus einer Datenbank ausgelesen.

Beispielsweise kann das Eingabemittel und/oder das Übertragungsmittel ein mit dem Internet, insbesondere dem World Wide Web verbindbarer Clientrechner sein. Die o.g. Funktionen des Eingabe-, Übertragungs-, und/oder des Erkennungsmittels werden dann mit Hilfe entsprechend zusammenwirkender Software-Komponenten erreicht, welche auf dem Clientrechner geladen sind. Als Clientrechner kann z.B. auch ein spezielles Telefon, insbesondere Mobiltelefon, beispielsweise ein WAP-Handy fungieren. Wie oben erläutert, ist auf dem Clientrechner als Clientsoftware ein Web-Browser geladen (oder eine beliebige andere Internet-Clientsoftware). Der Browser bzw. die Clientsoftware sorgt dafür, daß auf einem Anzeigemittel, z.B. einem Bildschirm, einem Display, etc. ein Eingabefeld für URL-Adressen (und/oder ein Eingabefeld für E-mail Adressen) dargestellt wird. Gibt ein Benutzer z.B. Maus-, Tasten-, sprach-, oder stiftgesteuert (d.h. an einem Display über eine dort dargestellte virtuelle Tastatur / Benutzeroberfläche, wie z.B. bei den o.g. Kleincomputern bzw. Personal Digital Assistents (PDAs), insbesondere Palm-Rechner, üblich) eine Zahlen/Buchstabenfolge ein, wird diese dem Benutzer am Eingabefeld dargestellt. Anschließend wird - bei Eingabe einer herkömmlichen E-mail Adresse bzw. einer herkömmlichen URL-Adresse z.B. eine erstellte E-mail an die eingegebene E-mail Adresse geschickt, oder die zu der eingegebenen URL-Adresse gehörende Internetseite am Anzeigemittel dargestellt - nach Aufbau einer entsprechenden Internetverbindung-.

Wird statt einer URL-Adresse eine Kennung in ein URL-Eingabefeld eingegeben, kann dies vom Erkennungsmittel z.B. dadurch ermittelt werden, daß die eingegebene Zeichenfolge keinen URL-spezifischen Bestandteil aufweist, z.B. nicht den Bestandteil "http://" (und/oder keinen Bestandteil "www", und/oder keinen Top-Level-Domain Bestandteil ".com", ".de", etc.). Alternativ oder zusätzlich kann das Erkennungsmittel die Kennung über einen kennungsspezifischen Bestandteil ermitteln, und/oder über eine sämtlichen Kennungen gemeine Eigenschaft. Wie oben erläutert, kann die Kennung vorteilhaft eine reine Ziffernfolge sein - das Erkennungsmittel kann dann z.B. die Eingabe einer Kennung z.B. dadurch erkennen, daß in das URL-Eingabefeld ausschließlich Ziffern, d.h. keine Buchstaben eingegeben wurden.

Entsprechend kann das Erkennungsmittel die Eingabe einer Kennung anstelle einer E-mail Adresse in ein E-mail-Adreß-Eingabefeld z.B. dadurch ermitteln, daß die eingegebene Zeichenfolge keinen E-mail-spezifischen Bestandteil aufweist, z.B. nicht den Bestandteil "@" (und/oder keinen Top-Level-Domain Bestandteil ".com", ".de", etc.). Ebenso ist die Erkennung der Kennung über einen kennungsspezifischen Bestandteil, und/oder eine sämtlichen Kennungen zukommende Eigenschaft (nur aus Ziffern bestehend, bestimmte Quersumme, bestimmte Länge, etc.) möglich.

Alternativ ist denkbar, daß der Browser zunächst die Eingabe in das Eingabefeld als URL-Adresse ansieht, und versucht, die entsprechende Internetseite aufzurufen. Stellt er fest, daß eine Internetseite dieses Namens nicht existiert, ruft er stattdessen - wie im Stand der Technik bekannt - eine Internet-Suchmaschine auf (d.h. eine entsprechende, dieser zugeordnete Internetseite). Die Suchmaschine sucht dann nach dem in das Eingabefeld eingegebenen Begriff. Dies geschieht i.a. anhand eines oder mehrerer spezieller, einer Internetseite zugeordneten Datenfelder (sog. Metatags), z.B. einem Beschreibungsfeld, einem Keywordfeld, und einem Titelfeld einer Internetseite. Das Keywordfeld enthält ein Veizeichnis wichtiger in der Internetseite vorkommender Wörter, das Beschreibungsfeld eine Kurzbeschreibung der Internetseite, und das Titelfeld den Seitentitel. (Das Keywordund das Beschreibungsfeld sind beim "normalen" Aufruf der Internetseite nicht sichtbar). Vorteilhaft ist vorgesehen, daß sämtliche spezielle Datenfelder der Internetseite, insbesondere das Titel-, Keyword-, und Beschreibungsfeld die o.g. Kennung enthalten, besonders vorteilhaft mit dieser identisch sind. Alternativ kann die Kennung z.B. auch nur im Keyword- und/oder Beschreibungsfeld gespeichert sein. Besonders vorteilhaft ist es, wenn die Kennung in den speziellen Datenfeldern derjenigen Internetseite gespeichert ist, deren URL - z.B. in der Datenbank des zentralen Computers - eben dieser Kennung zugeordnet ist Stellt die Suchmaschine Identität zwischen eingegebener Kennung und Titelfeld fest, kann sie z.B. automatisch die der Kennung zugeordnete Internetseite aufrufen (oder alternativ die URLs von Internetseiten anzeigen, deren spezielle Datenfelder die Kennung enthalten).

Denkbar ist auch, daß einer Kennung eine Internetseite zugeordnet wird, deren URL die Kennung enthält bzw. die bis auf den Top-Level-Domainnamen und/oder sonstige URLspezifische Elemente3 identisch mit der Kennung ist Beispielsweise kann der Kennung "12345" eine Internetseite mit der URL "12345.com" oder "12345.de" (bzw. genauer ''http://www.12345.com" oder "http://www.12345.de") zugeordnet werden).

Besonders von Vorteil ist es, wenn bereits vom Benutzer verwendeten Kennungen, sowie die zugehörigen (vom zentralen Computer zu den Eingabemitteln gesendeten) URLs in den Eingabemitteln abgespeichert werden. Das Erkennungsmittel ist vorteilhaft so ausgestaltet, daß es bei Eingabe einer URL abfrägt, ob diese bereits - in Form einer Kennung - verwendet wurde. Ist dies der Fall, wird dies dem zentralen Computer gemeldet (z.B. zusammen mit einer Benutzerkennung, sodaß im zentralen Computer die unten erläuterten statistischen Auswertungen möglich sind).

Im zentralen Computer ist eine Datenbank gespeichert, in der jede Kennung mit einer zugehörigen URL-Adresse verknüpft ist.

Entsprechend liest der zentrale Computer bei Empfang einer URL-Kennung die zugehörige URL-Adresse aus der Datenbank aus. Er kann dann unmittelbar die Anzeige der zu der ermittelten URL-Adresse gehörenden Internetseite an einem Anzeigemittel veranlassen (durch Aufbau einer entsprechenden Internetverbindung zu dem zu der URL-Adresse zugeordneten Internet-Host). Alternativ kann der zentrale Computer auch die URL-Adresse an das o.g. Eingabemittel und/oder das Übertragungsmittel rückübertragen. Diese bauen dann eine Internetverbindung zu dem zu der Adresse gehörenden Web-Host auf sodaß die entsprechende Internetseite am Anzeigemittel angezeigt werden kann.

Besonders bevorzugt ist einer Kennung - vom "Eigentümer" der jeweiligen Kennung, oder vom Systemadministrator definiert - ein Keyword (Schlagwort) zugeordnet, und in der o.g. Datenbank des zentralen Computers abgespeichert. Alternativ können einer Kennung vom Eigentümer oder Systemadministrator auch mehrere Keywords zugeordnet werden. Vorteilhaft existiert im gesamten System jedes Keyword nur ein einziges Mal (ebenso wie jede Kennung).

Vorteilhaft liest der zentrale Computer bei Empfang eines Keywords die zugehörige URL-Kennung aus der Datenbank aus, und/oder die der Kennung zugeordnete URL-Adresse. Er kann dann unmittelbar die Anzeige der zu der ermittelten URL-Adresse gehörenden Internetseite an dem o.g. Anzeigemittel veranlassen (durch Aufbau einer entsprechenden Internetverbindung zu dem zu der URL-Adresse zugeordneten Internet-Host). Besonders vorteilhaft kann der zentrale Computer die URL-Adresse an das o.g. Eingabemittel und/oder das Übertragungsmittel rückübertragen. Diese bauen dann eine Internetverbindung zu dem zu der Adresse gehörenden Web-Host auf, sodaß die entsprechende Internetseite am Anzeigemittel angezeigt werden kann.

Vorteilhaft können in das o.g. Eingabemittel, z.B. den Browser, sowohl Keywords, URL-Kennungen, als auch URL-Adressen eingegeben werden. Beispielsweise ermittelt das o.g. Erkennungsmittel auf entsprechende Weise wie oben erläutert, ob eine URL-Adresse eingegeben wurde, oder nicht. Ist dies nicht der Fall, veranlasst sie die Übertragung des eingegebenen Keywords bzw. der eingegebenen URL-Kennung an den zentralen Computer. Alternativ kann das Erkennungsmittel auch automatisch zwischen Keywords und URL-Kennungen unterscheiden. Beispielsweise kann jede Kennung und/oder jedes Keyword über einen kennungs- bzw. keywordspezifischen Bestandteil, und/oder über eine sämtliche Kennungen bzw. Keywords zukommende Eigenschaft verfügen (z.B. können die Kennungen nur aus Ziffern, und die Keywords nur aus Buchstaben bestehen, die Kennungen können alle eine bestimmte Länge haben, etc.). Bei der Übertragung an den zentralen Computer wird dann vorteilhaft eine Kennung als Kennung, und ein Keyword als Keyword gekennzeichnet (z.B. durch ein entsprechendes, mitübertragenes Kennzeichenbit). Alternativ kann der Benutzer bei jeder Eingabe explizit eine Kennung als Kennung, ein Keyword als Keyword, und/oder eine URL-Adresse als URL-Adresse kennzeichnen. Wird eine Kennung und/oder ein Keyword eingegeben, wird wie oben erläutert deren Übertragung an den zentralen Computer veranlasst (zusammen mit dem o.g. Kennzeichenbit).

Vorzugsweise werden - sofort oder eine vorbestimmte Zeitdauer nach dem Empfang der URL-Kennung durch den zentralen Computer - Daten an die Anzeigemittel übertragen, um z.B. den Empfang der URL-Kennung zu bestätigen, und/oder um einen Informations- oder Werbetext an die Anzeigemittel zu senden. Vorteilhaft kann es sich bei den Daten auch um die weiter unten näher erläuterten, einer Benutzerkennung zugeordneten, benutzerspezifischen Daten handeln, insbesondere um Daten, des unten erläuterten "Visitenkartenfelds" (z.B. Vorname, Nachname, Firma, Postfach, Adresse, Telefonnummer, Mobiltelefonnummer, Telefax, E-mail-Adresse, URL-Adresse, eines (fremden) Benutzers). Mit anderen Worten kann ein Benutzer an seinem Eingabemittel die URL-Kennung des (fremden) Benutzers eingeben, und an den zentralen Computer senden, woraufhin dieser die "elektronische Visitenkarte" des (fremden) Benutzers an das Anzeigemittel übermittelt. Alternativ werden nur bestimmte Datenelemente des o.g. Visitenkartenfelds übermittelt, insbesondere die der Kennung zugeordnete E-Mail-Adresse, und/oder URL-Adresse.

Alternativ kann das Eingabemittel auch unter Zwischenschaltung eines weiteren Rechners mit dem zentralen kommunizieren, insbesondere über eine auf dem weiteren Rechner laufende Internetseite, besonders vorteilhaft mit Hilfe einer (vorgefertigten) Softwarekomponente, welche vom zentralen Rechner heruntergeladen, und in die Internetseite integriert wurde. Dies Sokwarekomponente sorgt für die Anzeige eines Eingabefelds am Eingabemittel, insbesondere PC oder Telefon, des Benutzers. Über das Eingabefeld kann der Benutzer eine Kennung eingeben, sowie eine Auswahl treffen, ob er die dieser Kennung zugeordnete "elektronische Visitenkarte" oder E-Mail-Adresse, oder URL angezeigt haben möchte. Daraufhin wird die Kennung, entsprechend der obigen Darstellung, vom weiteren Rechner an den zentralen Computer übertragen, sowie Steuerdaten, die angeben, ob die der Kennung zugeordnete "elektronische Visitenkarte", E-Mail-Adresse, oder URL-Adresse angezeigt werden soll.

Wie oben erwähnt, können erst nach Ablauf einer vorbestimmten Zeitdauer Daten vom zentralen Computer an das Anzeigemittel übermittelt werden (z.B. eine Werbebotschaft). Die vorbestimmte Zeitdauer kann z.B. länger als 10 Minuten dauern, insbesondere mehr als 1 Stunde. Vorzugsweise werden nach einer weiteren vorbestimmten Zeitdauer weitere Zusatzdaten übertragen (z.B. eine weitere Werbebotschaft). Vorteilhaft geschieht die Datenübertragung automatisch unter Steuerung des zentralen Computers.

Hierbei werden z.B. Anzeigemittel verwendet, die nahe bei, insbesondere weniger als 10m, besonders bevorzugt weniger als 1m entfernt von den Eingabe- und/oder Übertragungsmitteln angeordnet sind (beispielsweise kann es sich bei den Anzeigemitteln um einen über die Eingabe- und/oder Übertragungsmittel ansteuerbaren, diesen zugeordneten Bildschirm handeln) - insbesondere dann, wenn die o.g. "elektronische Visitenkarte" und/oder Werbebotschaften übertragen werden.

Besonders bevorzugt wird die ermittelte URL (oder die zugehörige Internetseite) an ein Anzeigernittel übertragen, welches entfernt, insbesondere mehr als 1 m, mehr als 10 m, mehr als 100 m, oder mehr als 1 km entfernt von den Eingabe- und/oder Übertragungsmitteln angeordnet ist. Bei einem mobilen Eingabemittel - z.B. einem tragbaren Telefon - bezieht sich der Begriff "entfernt" auf den Standort des Eingabemittels im Moment der Kennungseingabe.

Das Anzeigemittel kann z.B. ein stationärer, einem bestimmten Benutzer zugeordneter Rechner sein (bzw. genauer: dessen Bildschirm), oder ein einem bestimmten Benutzer zugeordnetes Telefon, insbesondere Bildtelefon. Die Ermittlung des jeweils anzusprechenden Anzeigemittels (unter einer Vielzahl möglicher Anzeigemittel) erfolgt z.B. durch Übertragung einer benutzerspezifischen Kennung (zusammen mit der o.g. URL-Kennung). Zu dieser benutzerspezifischen Kennung ist in der Datenbank des zentralen Computers z.B. die Telefonnummer des dem jeweiligen Benutzer zugeordneten Rechners, oder z.B. dessen URL-Adresse, sowie weitere Daten (siehe unten) gespeichert. Vorteilhaft sind jedem Benutzer mehrere Anzeigemittel zugeordnet, insbesondere ein gemäß obiger Definition "entferntes", und ein weiteres, gemäß obiger Definition nahe bei dem Eingabe- und/oder Übertragungsmittel angeordnetes Anzeigemittel. Der zentrale Computer kann die o.g. Daten beispielsweise standardmäßig an das o.g. "entfernte" Anzeigemittel übertragen (und an das "nahe" Anzeigemittel nur nach Übersendung eines entsprechenden, am Eingabemittel eingegebenen Steuerzeichens an den zentralen Computer - z.B. wenn die sofortige Übersendung einer "elektronischen Visitenkarte", oder einer Internetseite gewünscht ist).

Insbesondere bei einem "entfernt" von den Eingabe- und/oder Übertragungsmitteln angeordneten Anzeigemittel erfolgt die Übertragung der URL (bzw. der Internetseite oder der Daten) nicht unmittelbar nach Empfang der URL-Kennung, sondern dann, wenn der Benutzer das Anzeigemittel tatsächlich benutzt, insbesondere, nachdem er von dort aus eine Zusatzkennung an den zentralen Computer übertragen hat. Vorteilhaft entspricht diese der o.g. Benutzerkennung, und wird an weiteren, den "entfernten" Anzeigemitteln zugeordneten Eingabemitteln eingegeben.

Vorteilhaft werden die Anzeigemittel vom zentralen Computer so gesteuert, daß sie zusammen mit der URL weitere, der URL zugeordnete Informationen anzeigen, z.B. eine Inhaltsangabe der zu der URL gehörenden Internetseite. Besonders bevorzugt werden die URL und/oder die zugehörigen Informationen nicht sofort angezeigt, sondern vorher in einem den Anzeigemitteln zugeordneten Speichermittel gespeichert, z.B. in einem Speicher eines Computers und/oder Telefons. Vorteilhaft werden dort - auf die o.g. Weise vom Benutzer veranlaßt - mehrere URL abgespeichert (und die diesen jeweils zugeordneten Informationen, insbesondere Internetseiten-Inhaltsangaben). An den Anzeigemitteln, insbesondere einem Bildschirm, werden die verschiedenen URLs und die zugehörigen Informationen bevorzugt in Listen- bzw. Tabellenform dargestellt.

Durch Anklicken der angezeigten URL wird automatisch eine Internetverbindung zu dem zu der Adresse gehörenden Web-Host aufgebaut, sodaß die entsprechende Internetseite am Anzeigemittel angezeigt werden kann.

Vorteilhaft enthält die Internetseite genau identische Daten wie die o.g., der Kennung zugeordneten, in einem Printmedium wiedergegebenen Daten, z.B. den gesamten dort abgedruckten Text und /oder das dort abgebildete Bild, bzw. wesentliche Teile hiervon.

Wie bereits erläutert, ist im zentralen Computer eine Datenbank gespeichert, in der jede Kennung mit einer zugehörigen URL-Adresse (bzw. E-mail Adresse) verknüpft ist.

Vorteilhaft kann eine neue Kennung von einem entfernten Computer und/oder Telefon aus generiert werden, z.B. indem dort - nach entsprechender Authentifizierung des Benutzers - eine beliebige, gewünschte Kennung eingegeben, und an den zentralen Computer übertragen wird. Dieser kontrolliert, ob die Kennung bereits vergeben ist, und/oder ob sie in der Menge erlaubter Kennungen enthalten ist (z.B. nur aus Ziffern besteht, eine bestimmte Länge hat, eine bestimmte maximale Länge nickt überschreitet, etc.). Ist die Kennung eine erlaubte Kennung, und noch nicht vergeben, wird dieser eine ebenfalls am Computer bzw. Telefon eingegebene (und an den zentralen Computer übertragene) URL- bzw. E-mail Adresse zugeordnet. Mit anderen Worten wird in der o.g. Datenbank des zentralen Computers eine entsprechende Verknüpfung zwischen Kennung und URL- bzw. E-mail Adresse hergestellt.

Denkbar ist auch, daß der zentrale Computer zunächst ermittelt, ob die am Computer bzw. Telefon eingegebene Kennung in einer (vor)bestimmten Teilmenge der Menge erlaubter Kennungen enthalten ist. Diese Teilmenge kann z.B. leicht zu merkende Kennungen enthalten (wie etwa die Kennungen "111111", "123456"), d.h. z.B. Kennungen mit lauter gleichen Ziffern, etc. In dieser Teilmenge enthaltene Kennungen können z.B. für das o.g. (automatische) Vergabeverfahren gesperrt sein, d.h. vom Betreiber des zentralen Computers separat verkauft oder versteigert werden.

Besonders bevorzugt wird zwischen temporären und dauerhaften Kennungen unterschieden. Eine temporäre Kennung gibt der zentrale Computer nach einer vorbestimmten Zeitdauer, insbesondere weniger als zwei Tagen, insbesondere weniger als 1 Tag, automatisch wieder frei; sie kann dann einer neuen URL zugeordnet werden. Die temporäre Kennung wird z.B. erzeugt, indem zunächst eine URL in das o.g. URL-Eingabefeld des Eingabemittels eingegeben wird, und diese dann an den zentralen Computer übermittelt wird (z.B. gekennzeichnet mit einem Datenfeld, welches anzeigt, daß für diese URL eine Kennung, insbesondere eine temporäre Kennung kreiert werden soll, z.B. durch Betätigen einer speziellen Taste bzw. Software-Buttons). Der zentrale Computer ordnet nach Empfang einer derartigen URL dieser eine freie (temporäre) Kennung zu.

Eine temporäre Kennung erfüllt z.B. folgenden Zweck: Ein Nutzer kann vorübergehend eine Kennung für eine URL erzeugen, um diese (auf einfache Weise) z.B. mündlich, insbesondere per Telefon, einem weiteren Nutzer zu übermitteln. Der weitere Nutzer kann dann unmittelbar die zugehörige Internetseite laden, woraufhin die Kennung - automatisch nach der o.g. vorbestimmten Zeitdauer - wieder freigegeben werden kann.

Bevor ein Nutzer eine Zugangsberechtigung zum erfindungsgemäßen System erhält, wird seine Benutzerkennung im o.g. zentralen Computer registriert. Dabei werden vorteilhaft noch weitere, dieser Benutzerkennung zugeordnete, benutzerspezifische Daten im zentralen Computer abgespeichert: Geschlecht und/oder Wohnsitz bzw. Firmensitz und/oder Geburtsjahr und/oder Beruf und/oder Einkommen und/oder Telefonnummer und/oder E-mail-Adresse und/oder URL-Adresse, etc., des Benutzers. Außerdem kann der Benutzer das o.g., einer Kennung zugeordnete Keyword (oder mehrere Keywords) im zentralen Computer registrieren. Außer einer direkten Registrierung durch entsprechende (direkte) Dateneingaben in den zentralen Computer kann die Registrierung z.B. auch indirekt erfolgen, z.B. mit Hilfe einer Softwarekomponente, welche in eine beliebige, auf einem weiteren Rechner laufende Internetseite integrierbar ist, und welche für eine entsprechende Kommunikation zwischen dem weiteren Rechner und dem zentralen Computer sorgt, in deren Verlauf die Benutzerregistrierung erfolgt Die Softwarekomponente kann vorteilhaft vom zentralen Computer auf einen beliebigen, weiteren Rechner heruntergeladen werden. Die auf diesem laufende Internetseite, insbesondere die in diese integrierte Registrierungs-Softwarekomponente, wird vom Benutzer über das Internet von einem dritten, entfernten Rechner aus angesteuert.

Ein Teil der o.g. Daten (und ggf. zusätzliche, weitere Daten) kann im zentralen Computer als zu der Benutzerkennung gehöriges "Visitenkartenfeld" abgespeichert sein (z.B. Vorname, Nachname, Firma, Postfach, Adresse, Telefonnummer, Mobiltellefonnummer, Telefax, E-mail-Adresse, URL-Adresse, etc.). Möchte ein Dritter Zugriff auf diese Daten haben, muß er die zu diesen Daten gehörende Benutzerkennung an den zentralen Computer übertragen. Da Übertragen kann z.B. auch indirekt geschehen, z.B. dadurch, dass der Benutzer die Benutzerkennung auf einer an seinem Rechner dargestellten weiteren Intemetseite eingibt, woraufhin eine spezielle Progmmamkomponente der Internetseite die Übertragung der Benutzerkennung an den zentralen Computer, und daraufhin die Darstellung der im o.g. Visitenkartenfeld enthaltenen Daten auf der weiteren Internetseite veranlasst. Besonders vorteilhaft entspricht die Benutzerkennung der o.g. Kennung.

Jeder Zugriff eines Benutzers auf eine Kennung (bzw. auf eine dieser Kennung zugeordneten URL) wird im zentralen Computer dokumentiert. Mit anderen Worten führt der zentrale Rechner eine Statistik darüber, wie oft und von welchem Benutzer mit welcher Benutzerkennung auf eine bestimmte Kennung zugegriffen wurde. Aufgrund der o.g. zusätzlichen benutzerspezifischen Daten kann der zentrale Computer dann weitere Statistiken generieren, z.B. dahingehend, welcher Personenkreis (welchen Geschlechts / mit welchem Beruf, etc.) häufig auf eine bestimmte URL zugreift. Es können dann benutzerspezifisch ausgewählte Informationen (z.B. Werbeeinblendungen) an das dem Benutzer zugeordnete Eingabemittel und/oder Anzeigemittel gesendet werden.

Zur näheren Erläuterung der Erfindung werden im folgenden mehrere Ausführungsbeispiele beschrieben. Es zeigen:
**Figur 1** eine erfindungsgemäße Vorrichtung zum Erfassen und Abspeichern von URLs mittels eines herkömmlichen Telefons;
**Figur 2** eine weitere erfindungsgemäße Vorrichtung zum Erfassen und Abspeichern von URLs mittels eines herkömmlichen Mobiltelefons;
**Figur 3** eine weitere erfindungsgemäße Vorrichtung zum Erfassen und Abspeichern von URLs mittels eines herkömmlichen PC und einer Zusatzvorrichtung;
**Figur 4** eine Zuordnungstabelle zwischen den Anrufkennungen und den dazugehörigen Ziffernfolgen in der zentralen Datenbank; und
**Figur 5** eine Zuordnungstabelle zwischen den Ziffernfolgen und den dazugehörigen Informationen und URLs in der zentralen Datenbank.

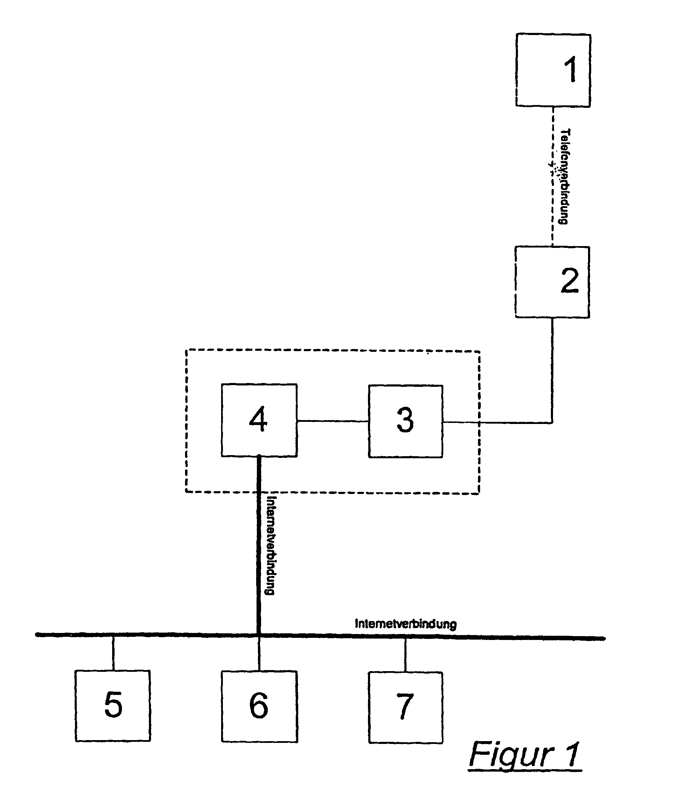

**Figur 1** stellt ein erstes Ausführungsbeispiel der Erfindung dar.

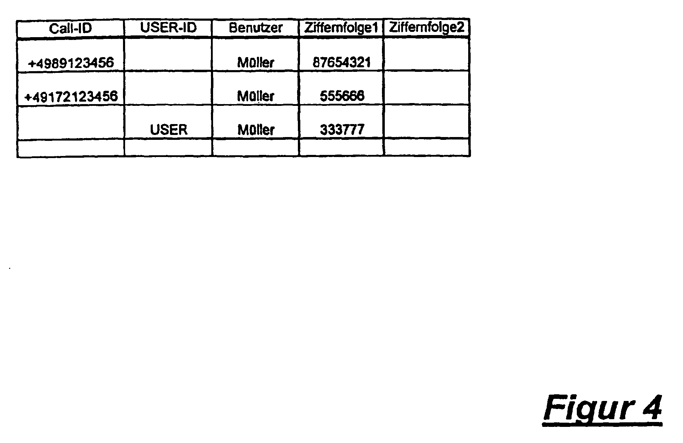

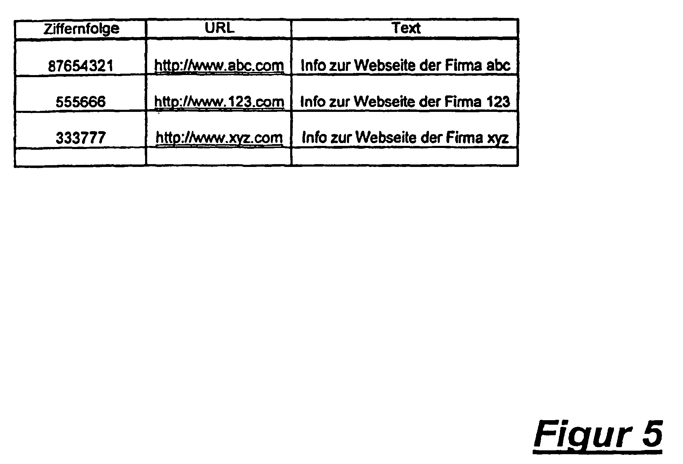

**Block 1** symbolisiert ein Telefon welches über eine Telefonleitung direkt eine Verbindung mit einem Modem (2) aufbauen kann. Das Telefon (1) kann die Ziffernfolgen über die Telefonverbindung und das Modem (2) direkt an die zentrale Datenbank (3) übermitteln und dort speichern. Die Zuordnung erfolgt dabei über die Anruferkennung (Call-ID) des Telefons (1). Wird z.B. vom Telefon (1) mit der Anruferknnung +4989123456 die Ziffernfolge 87654321 übermittelt wird diese im Datensatz der Anruferkennung +4989123456 und dem dieser zugeordneten Benutzer (z.B. Müller) abgespeichert. Ein Beispiel dieser Zuordnungstabelle ist in **Figur 4** dargestellt. Der mit der Datenbank (3) verbundene Webserver (4) stellt nun in einem speziellen nur für den Benutzer des Telefon (1) durch ein Passwort zugänglichen Bereich einer Internetwebseite die den von diesem Benutzer abgespeicherten Ziffernfolgen zugeordneten Informationen dar. Die Zuordnung der Informationen zu den abgespeicherten Ziffernfolgen erfolgt in der zentralen Datenbank über eine in **Figur 5** dargestellten Tabelle welche für jede Ziffernfolge die dieser zugeordnete Informationen enthält. Diese zugeordnete Informationen bestehen vorzugsweise mindestens aus der URL der Webseite sowie einer Beschreibung dieser Webseite. Somit kann von jedem, mit dem Internet verbundenen, Computer (5 bis 7) die den übermittelten und gespeicherten Ziffernfolgen zugeordneten Informationen über die Intemetwebseite abgerufen werden. Dadurch kann der Benutzer durch Übermittlung einer oder mehrerer Ziernfolgen z.B. per Telefon eine URL unabhängig von seinem Aufenthaltsort weltweit abspeichern und diese an einem beliebigen mit dem Internet verbundenen Computer wieder abrufen und dadurch z.B. direkt auf die Internetseite (z.B. http://www.abc.com) der der Ziffernfolge (z.B. 87654321) zugeordneten Firma (z.B. ABC) gelangen.

Ein weiterer Vorteil ergibt sich bei der Eingabe sog. WAP (wireless application protocol) Domains (z.B. http://wap.abc.com), diese Domains werden z.B. in WAP-fähige Mobiltelefone zum Aufruf spezieller WAP-Seiten eingegeben. Da das Eingeben solcher Domains mittels einer Mobiltelefontastatur recht schwierig ist, ist es von Vorteil lediglich eine Ziffernfolge einzugeben, welche der WAP-Domain zugeordnet ist.

Ein weiterer Anwendungsbereich ergäbe sich beim Abspeichern von Adressen, welche z.B. auf Visitenkarten angegeben sind. Ist auf der Visitenkarte eine solche Ziffernfolge (z.B. 555666) angegeben, kann, anstatt die Adresse der Visitenkarte z.B. in ein Adressverwaltungsprogramm auf einem PC einzugeben, dort lediglich diese Ziffernfolge eingeben werden; der PC kann sich dann mit der Datenbank verbinden und die unter der Ziffernfolge (z.B. 555666) gespeicherte Information abrufen und im Adressverwaltungsprogramm abspeichern.

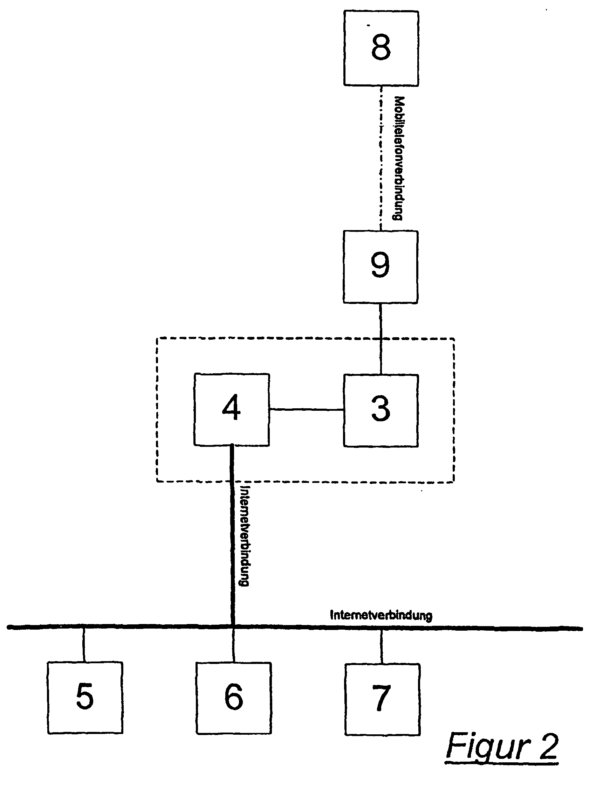

**Figur 2** stellt ein weiteres Ausführungsbeispiel der Erfindung dar.

Block 8 symbolisiert ein Mobiltelefon welches über eine Mobilfunkverbindung direkt eine Verbindung mit einem Mobilfunkgateway (9) aufbauen kann. Das Mobiltelefon (8) kann die Ziffernfolgen über die Mobilfunkverbindung vorzugsweise durch die Übermittlung einer SMS (short-message-service) über den Mobilfunkgateway (9) direkt an die zentrale Datenbank (3) übermitteln und dort speichern. Wobei der Inhalt der SMS eine oder mehrere Ziffernfolgen sind. Die Zuordnung erfolgt dabei über die Anruferkennung (Call-ID) des Mobiltelefons (8). Wird z.B. vom Mobiltelefon (8) mit der Anruferkennung +49172123456 die Ziffernfolge 555666 übermittelt wird diese im Datensatz der Anruferkennung +49172123456 und dem dieser zugeordneten Benutzer (z.B. Müller) abgespeichert. Ein Beispiel dieser Zuordnungstabelle ist in **Figur 4** dargestellt. Der mit der Datenbank (3) verbundene Webserver (4) stellt nun in einem speziellen nur für den Benutzer des Mobiltelefons (8) durch ein Passwort zugänglichen Bereich einer Internetwebseite die den von diesem Benutzer abgespeicherten Ziffernfolgen zugeordneten Informationen dar. Die Zuordnung der Informationen zu den abgespeicherten Ziffernfolgen erfolgt in der zentralen Datenbank über eine in **Figur 5** dargestellten Tabelle welche für jede Ziffernfolge die dieser zugeordnete Informationen enthält. Diese zugeordnete Informationen bestehen vorzugsweise mindestens aus der URL der Webseite sowie einer Beschreibung dieser Webseite. Somit kann von jedem, mit dem Internet verbundenen, Computer (5 bis 7) die den übermittelten und gespeicherten Ziffernfolgen zugeordneten Informationen über die Internetwebseite abgerufen werden. Dadurch kann der Benutzer durch Übermittlung einer oder mehrerer Ziffernfolgen z.B. per Telefon eine URL unabhängig von seinem Aufenthaltsort weltweit abspeichern und diese an einem beliebigen mit dem Internet verbundenen Computer wieder abrufen und dadurch z.B. direkt auf die Internetseite (z.B. http://www.123.com) der der Ziffernfolge (z.B. 555666) zugeordneten Firma (z.B. 123) gelangen.

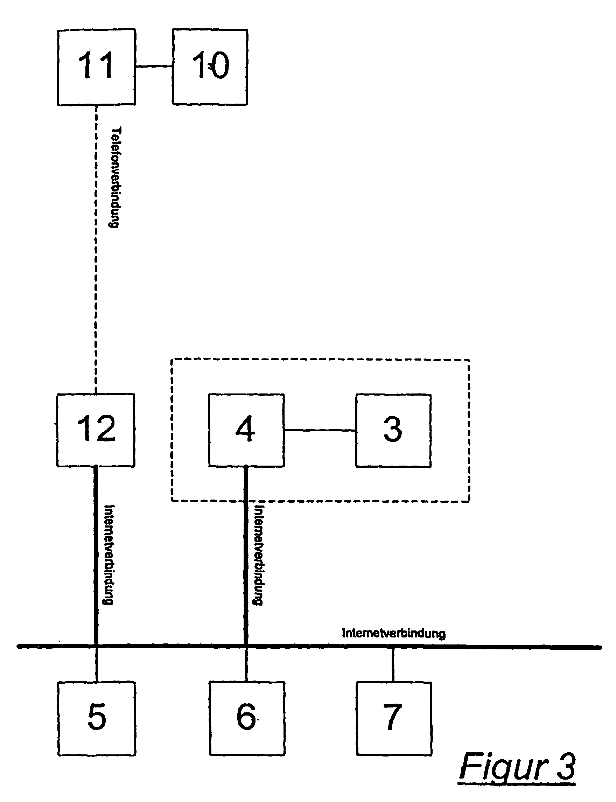

**Figur 3** stellt ein zusätzliches Ausführungsbeispiel der Erfindung dar.

Block 10 symbolisiert eine Vorrichtung zur Eingabe und Zwischenspeicherung von Ziffernfolgen welche zur Übertragung mit einem PC (11) verbunden ist. Der PC (11) kann z.B. über eine Telefonleitung eine Verbindung mit einem Internetserviceprovider (12) herstellen. Der PC (11) kann die aus der Vorrichtung zur Eingabe und Zwischenspeicherung von Ziffernfolgen (10) ausgelesenen Ziffernfolgen über die Telefonleitung und den Internetserviceprovider (12) direkt an die zentrale Datenbank (3) übermitteln und dort speichern. Die Zuordnung erfolgt dabei über die User-ID des PCs (11). Wird z.B. vom PC (11) mit der User-ID USER die Ziffernfolge 333777 übermittelt wird diese im Datensatz der User-ID USER und dem dieser zugeordneten Benutzer (z.B. Müller) abgespeichert. Ein Beispiel dieser Zuordnungstabelle ist in Figur 4 dargestellt. Der mit der Datenbank (3) verbundene Webserver (4) stellt nun in einem speziellen nur für den Benutzer des Computers (11) durch ein Passwort zugänglichen Bereich einer Internetwebseite die den von diesem Benutzer abgespeicherten Ziffernfolgen zugeordneten Informationen dar. Die Zuordnung der Informationen zu den abgespeicherten Ziffernfolgen erfolgt in der zentralen Datenbank über eine in Figur 5 dargestellten Tabelle welche für jede Ziffemfolge die dieser zugeordnete Informationen enthält. Diese zugeordnete Informationen bestehen vorzugsweise mindestens aus der URL der Webseite sowie einer Beschreibung dieser Webseite. Somit kann von jedem, mit dem Internet verbundenen, Computer (5 bis 7) die den übermittelten und gespeicherten Ziffernfolgen zugeordneten Informationen über die Internetwebseite abgerufen werden. Dadurch kann der Benutzer durch Übermittlung einer oder mehrerer Ziffernfolgen z.B. per Telefon eine URL unabhängig von seinem Aufenthaltsort weltweit abspeichern und diese an einem beliebigen mit dem Internet verbundenen Computer wieder abrufen und dadurch z.B. direkt auf die Internetseite (z.B. http://www.xyz.com) der der Ziffernfolge (z.B. 333777) zugeordneten Firma (z.B. XYZ) gelangen.

## Patentansprüche

1. Kommunikationssystem, welches von mehreren Benutzern gemeinsam benutzt werden kann, und welches aufweist:
a) ein Eingabemittel (1) zum Eingeben einer Kennung, die Element einer Menge von n vorbestimmten Kennungen ist, durch einen ersten Benutzer;
b) ein Übertragungsmittel zum Übertragen der Kennung; wobei das Kommunikationssystem weiterhin aufweist:
c) einen zentralen Computer (4) zum Empfangen der Kennung, und zum Zuordnen der Kennung zu einer von der Kennung verschiedenen, dieser zugeordneten URL aus einer Menge von n vorbestimmten URLs, wobei die Zahl n kleiner ist als die Anzahl m existierender URLs;
d) Speichermittel (3) zum Speichern der Kennung unter Zuordnung zum ersten Benutzer, und zum Speichern von der Kennung zugeordneten Informationen;
e) ein weiteres, vom Eingabemittel (1) entfernt angeordnetes Mittel (5, 6, 7) zum späteren Abrufen der gespeicherten Kennung und der dieser zugeordneten Informationen durch den ersten Benutzer.

2. System nach Anspruch 1, bei welchem die Kennung eine Ziffernfolge ist.

3. System nach Anspruch 1 oder 2, bei welchem die Kennung eine Ziffernfolge ist, die aus weniger als 20, insbesondere weniger als 15, insbesondere weniger als 10 Ziffern besteht.

4. System nach einem der vorhergehenden Ansprüche, bei welchem die Kennung so gewählt ist, das sie einer Telefonnummer entspricht, insbesondere der Telefonnummer eines dem Eingabemittel und/ oder dem Übertragungsmittel zugeordneten Telefonanschlusses.

5. System nach einem der vorhergehenden Ansprüche, bei welchem die Kennung ein Barcode ist.

6. System nach einem der vorhergehenden Ansprüche, bei welchem der zentrale Computer die einer bestimmten URL zugeordnete Kennung nach einer vorbestimmten Zeitdauer, insbesondere weniger als einem Tag, insbesondere weniger als 3 Stunden, automatisch wieder freigibt.

7. System nach einem der vorhergehenden Ansprüche, bei welchem das Eingabemittel und/oder das Übertragungsmittel Teil eines Telephons, insbesondere eines tragbaren Telephons sind, oder Teil eines Computers, insbesondere eines tragbaren Computers oder eines PCs.

8. System nach einem der vorhergehenden Ansprüche, bei welchem das Eingabemittel und/oder das Übertragungsmittel entfernt, insbesondere mehr als 1 km entfernt vom zentralen Computer angeordnet sind.

9. Verfahren zum Übertragen einer URL an einen zentralen Computer, welches die Schritte aufweist:
a) Eingeben einer Kennung in ein Eingabemittel, wobei die Kennung ein Element einer Menge von n vorbestimmten Kennungen ist, durch einen ersten von mehreren Benutzern;
b) Übertragen der Kennung durch ein Übertragungsmittel an einen zentralen Computer;
c) Empfangen der Kennung durch den zentralen Computer, und Zuordnen der Kennung zu einer von der Kennung verschiedenen, dieser zugeordneten URL. aus einer Menge von n vorbestimmten URLs, wobei die Zahl n kleiner ist als die Anzahl m existierender URLs; **gekennzeichnet durch** den Schritt.
d) Speichern der Kennung unter Zuordnung zum ersten Benutzer, und Speichern von der Kennung zugeordneten Informationen, zum späteren Abrufen der gespeicherten Kennung und der dieser zugeordneten Informationen von einem entfernt vom Eingabemittel (1) angeordneten Informationsabrufinittel (5, 6, 7) aus **durch** den ersten Benutzer.

10. Zentraler Computer zur Verwendung in einem Verfahren gemäß Anspruch 9, welcher so ausgestaltet ist, dass mit ihm der Schritt c) des Verfahrens gemäß Anspruch 9 durchführbar ist, und **dadurch gekennzeichnet, dass** er die Speicherung der Kennung unter Zuordnung zum ersten Benutzer, und von der Kennung zugeordneten Informationen veranlasst, so dass die gespeicherte Kennung und die dieser zugeordneten Informationen später von einem entfernt vom Eingabemittel (1) angeordneten Informationsabrufmittel (5, 6, 7) aus durch den ersten Benutzer abgerufen werden können.

## Claims

1. Communication system which can commonly be used by several users, and which comprises:
a) an input means (1) for inputting an Identification which is an dement of a set of n predetermined identifications by a user;
b) a transmission means for transmitting the identification; whereby the communication system further comprises:
c) a central Computer (4) for receiving the identification, and for assigning the identification to an URL different from and assigned to the identification, of a set of n predetermined URLs, whereby the number n is smaller than the number m of existing URLs;
d) storage means (3) for storing the identification, whereby the identification is stored assigned to the first user, and for storing of information assigned to the identification;
e) further means (5, 6, 7) located remote of the input means (1) for later fetching the stored identification and the information assigned thereto by the user.

2. System according to claim 1, whereby the identification is a numeric string.

3. System according to claim 1 or 2, whereby the identification is a numeric string consisting of less than 20, in particular less than 15, in particular less than 10 numerals.

4. System according to one of the preceding claims, whereby the identification is chosen such that it corresponds to a telephone number, in particular to the telephone number of a telephone connection assigned to the input means and/or the transmission means.

5. System according to one of the preceding claims, whereby the identification is a bar code.

6. System according to one of the preceding claims, whereby the central Computer after a predetermined amount of time, in particular less than a day, in particular less than 3 hours, automatically releases the identification assigned to a certain URL.

7. System according to one of the preceding claims, whereby the input means and/or the transmission means are part of a telephone, in particular a mobile telephone, or part of a Computer, in particular a portable Computer or a PC.

8. System according to one of the preceding claims, whereby the input means and/or the transmission means are located remote, in particular more than 1 km remote of the central computer.

9. Method for transmitting a URL to a central Computer, comprising the steps:
a) inputting an identification into an input means by a one of several users, whereby the identification is an element of a set of n predetermined identifications;
b) transmitting the identification by a transmission means to a central Computer;
c) receiving the identification by the central Computer, and assigning the identification to an URL different from and assigned to the identification, of a set of n predetermined whereby the number n is smaller than the number m of existing **characterised by** the step of
d) storing the identification, assigned to the user, and storing of information assigned to the identification, for later fetching the stored identification and the information assigned thereto by the user from an information fetching means (5, 6, 7) located remote of the means (1).

10. Central Computer for use in a method according to claim 9, which is built such that step c) of the method according to claim 9 can be performed with it, and which is **characterised in that** it causes the storing of the identification, assigned to the user, and of information assigned to the identification, such that the stored tification and the information assigned thereto later can be fetched from an information fetching means (5, 6, 7) located remote of the input means (1) by the user.

## Revendications

1. Système de communication, lequel peut être utilisé con- par plusieurs utilisateurs et
a) un moyen d'entrée (1) pour qu'un premier utilisateur entre un identifiant qui est un élément parmi un grand nombre de n identifiants
b) un moyen de transmission pour transmettre l'identifiant, le système de communication comportant
c) un ordinateur central (4) pour recevoir l'identifiant et pour associer l'identifiant à une URL différente de et associée à celui-ci parmi un grand nombre n d' URL prédéfinies, le nombre n étant inférieur nombre m des URL existantes,
d) des moyens d'enregistrement (3) pour enregistrer l'identifiant en l'associant au premier utilisateur et pour enregistrer des informations associées à l'identifiant,
e) un autre moyen (5, 6, 7), placé à distance du moyen d'entrée (1), pour que le premier utilisateur appelle ultérieurement l'identifiant enregistré et les informations qui lui sont associées.

2. Système selon la revendication 1, dans lequel l'identifiant est une suite de chiffres.

3. Système selon revendication 1 ou 2, dans lequel l'identifiant est une suite de chiffres comportant moins de 20, en particulier moins de 15, plus en particulier moins de 10 chiffres.

4. Système selon l'une des revendications précédentes, dans lequel l'identifiant est choisi de telle sorte qu'il corresponde à un numéro de téléphone, en particulier au numéro de téléphone d'un raccordement téléphonique associé moyen d'entrée et/ou au moyen de transmission.

5. Système selon l'une des revendications précédentes, dans lequel l'identifiant est un code barres.

6. Système selon l'une des revendications précédentes, dans lequel l'ordinateur central libère automatiquement l'identifiant associé à une URL définie après une durée prédéterminée, en particulier moins d'un jour, plus en particulier moins de 3 heures.

7. Système selon l'une des revendications précédentes, dans lequel le moyen d'entrée et/ou le moyen de transmission font partie d'un téléphone, en particulier d'un téléphone portable, ou font partie d'un ordinateur, en particulier d'un ordinateur portable ou d'un ordinateur de bureau.

8. Système selon l'une des revendications précédentes, dans lequel le moyen d'entrée et/ou le moyen de transmission sont placés à distance de l'ordinateur central, en particulier à plus de 1 km.

9. Procédé pour transmettre une à un ordinateur central, lequel comporte les étapes
a) entrée d'un identifiant dans un moyen d'entrée par un premier utilisateur parmi un grand nombre, l'identifiant étant un élément parmi un grand nombre de n identifiants prédéfinis,
b) transmission de l'identifiant à un ordinateur central grâce à un moyen de transmission,
c) réception de l'identifiant par l'ordinateur central et association de l'identifiant à une URL, différente de l'identifiant et associée à celui-ci, parmi un grand nombre n d'URL prédéfinies, le nombre n étant inférieur nombre m des URL existantes,
**caractérisé par** l'étape
d) d'enregistrer l'identifiant en l'associant au premier utilisateur et enregistrer des informations associées à l'identifiant pour que, à partir d'un moyen d'appel d'informations (5, 6, 7) placé à distance du moyen d'entrée (1), le premier utilisateur appelle ultérieurement l'identifiant enregistré et les informations qui lui sont associées.

10. Ordinateur central à utiliser dans un procédé selon la revendication 9, lequel est conçu de telle sorte qu'il permet de réaliser l'étape c) du procédé selon la revendication 9, et **caractérisé en ce qu'**il provoque l'enregistrement de l'identifiant en l'associant au premier utilisateur et l'enregistrement d'informations associées à l'identifiant, de sorte que, à partir d'un moyen d'appel d'informations (5, 6, 7) placé à distance du moyen d'entrée (1), le premier utilisateur puisse ultérieurement appeler l'identifiant enregistré et les informations qui lui sont associées.
